# EUROPÄISCHE PATENTANMELDUNG

(11) **EP 1 528 843 A1**
(43) Veröffentlichungstag der Anmeldung: **04.05.2005**
(21) Anmeldenummer: 03024906.4
(22) Anmeldetag: 28.10.2003
(51) Int. Cl.: H05B 37/02, H05B 37/03

(54) **Verfahren zur Instandhaltung einer technischen Vorrichtung**

(71) Anmelder: Patent-Treuhand-Gesellschaft für elektrische Glühlampen mbH, 81543 München (DE)
(72) Erfinder: Boulouednine, Mourad, 81397 München (DE)

(57) **Zusammenfassung**

Es wird vorgeschlagen, die Bestandteile einer technischen Vorrichtung in einer Initialisierungsphase zu identifizieren und spezifische Daten dieser Bestandteile mit Hilfe eines Datenbanksystems zu erfassen. In einer Prognosephase werden dann die Wartungstermine für die Bestandteile der technischen Vorrichtung auf der Basis der spezifischen Daten dieser Bestandteile berechnet. Optional schließen sich noch eine Analyse- und eine Optimierungsphase an. Dadurch kann die Verfügbarkeit, Wirtschaftlichkeit und technische Aktualität der technischen Vorrichtung verbessert werden.

## Beschreibung

### Technisches Gebiet

Die Erfindung betrifft ein Verfahren zur Instandhaltung technischer Vorrichtungen, insbesondere Beleuchtungsanlagen, d.h. Vorrichtungen die Leuchten, Lampen und eventuell zusätzlich Vorschaltgeräte für den Betrieb der Lampen umfassen.

### Stand der Technik

Aufgrund der Komplexität und zur Kostenreduzierung wird die Dokumentation und Instandhaltung weitverzweigter technischer Vorrichtungen in Gebäuden, beispielsweise Klimaanlagen, in jüngerer Zeit zunehmend von speziellen Computerprogrammen, Computer Aided Facility Management (CAFM), unterstützt.

### Darstellung der Erfindung

Die Aufgabe der vorliegenden Erfindung ist es, ein verbessertes Verfahren zur Instandhaltung technischer Vorrichtungen, insbesondere von Beleuchtungsanlagen anzugeben.

Diese Aufgabe wird gelöst durch ein Verfahren zur Instandhaltung einer technischen Vorrichtung, insbesondere einer Beleuchtungsanlage, mit Hilfe eines Rechnersystems und folgenden Verfahrensschritten,
in einer Initialisierungsphase:
o Identifizierung der Bestandteile der technischen Vorrichtung,
o Erfassung spezifischer Daten der Bestandteile mit Hilfe eines mit dem Rechnersystem zumindest zeitweise verbundenen Datenbanksystems,
o Speicherung der den Bestandteilen zugeordneten spezifischen Daten in dem Rechnersystem,
in einer Prognosephase:
o Berechnung von Wartungsterminen für die Bestandteile der technischen Vorrichtung auf der Basis der spezifischen Daten dieser Bestandteile.

Besonders vorteilhafte Ausgestaltungen finden sich in den abhängigen Ansprüchen.

Ziel ist es insbesondere, die Verfügbarkeit, Wirtschaftlichkeit und technische Aktualität einer technischen Vorrichtung zu verbessern. Dabei kann die technische Vorrichtung sowohl in stationären Einrichtungen wie Gebäuden, aber auch in mobilen Einrichtungen wie Schiffen oder Flugzeugen installiert sein. Besonders lohnenswert ist dieses Ziel naturgemäß in großen Gebäuden mit sehr weitverzweigten technischen Vorrichtungen, beispielsweise in Gebäuden der Industrie, der städtischen Verwaltung oder öffentliche Einrichtungen sowie in großen Schiffen.

Für die Initialisierungsphase ist es vorteilhaft, die Beleuchtungskomponenten nach den folgenden Kriterien zu charakterisieren: Anzahl der Leuchten und Lampen sowie die Anzahl der Lampen pro Leuchte, den jeweiligen Typ des gegebenenfalls verwendeten Vorschaltgerätes und die Anzahl der Betriebsstunden pro Jahr.

Um die Identifizierung der Bestandteile der technischen Vorrichtung nicht manuell im Rechnersystem durchführen zu müssen ist es vorteilhaft, die Bestandteile der technischen Vorrichtung über ein geeignetes Bussystem mit dem Rechnersystem zu verbinden. Die Identifizierung der Bestandteile wird dann durch das Bussystem unterstützt. Für Beleuchtungsanlagen ist hierfür z.B. das Digital Addressable Lighting Interface (DALI) Bussystem geeignet, das sich in jüngster Zeit zunehmend etabliert. Für weitere Details zu DALI sei auf die Schrift US-A 2003/036807 verwiesen.

Für die Berechnung der Wartungstermine wird im einfachsten Fall eine geschätzte Betriebsdauer der Bestandteile der technischen Vorrichtung herangezogen, die sich z.B. auf eine angenommene mittlere Betriebsdauer pro Tag multipliziert mit der effektiven Anzahl von Tagen seit der Installation stützt.

Für eine präzisere Berechnung der Wartungstermine ist es vorteilhaft, die tatsächlichen Betriebsdauern der Bestandteile über ein Bussystem, z.B. über die Messwertaufnehmer der Gebäudeleittechnik (GLT) zu ermittelten und der Berechnung zugrunde zu legen.

Jedenfalls geht in die Berechnung der Wartungstermine für jedes Bestandteil neben den geschätzten oder tatsächlichen Betriebsdauern noch die auf dem Datenbanksystem gespeicherten mittleren Lebensdauern ein oder es werden verschiedene Lebensdauermodelle der Beleuchtungstechnik (Anlagenlebensdauer, Nutzungslebensdauer) hinzu gezogen. Die Berechnung von Wartungsplänen erfolgt gemäß den Richtlinien der EN 12464 und den aus der Datenbank zur Verfügung gestellten Wartungsfaktoren der Beleuchtungskomponenten.

In einer vorteilhaften Weiterbildung des erfindungsgemäßen Verfahrens ist eine zusätzliche Analysephase vorgesehen, in der für die Bestandteile der technischen Vorrichtung zumindest einer der folgenden Verfahrensschritte ausgeführt wird:
o Erfassung des jeweiligen in dem Datenbanksystem gespeicherten Energieverbrauchswerts eines Bestandteils der Vorrichtung, z.B. abhängig von dem Vorschaltgerät, mit dem eine Lampe betrieben wird, und Speicherung in dem Rechnersystem,
o Berechnung eines ökonomischen Bewertungsfaktors aus zumindest einem Teil der spezifischen Daten jedes Bestandteils und Speicherung in dem Rechnersystem,
o Ermittlung der Häufigkeit gleicher bzw. ähnlicher Bestandteile und Speicherung in dem Rechnersystem,
o Ermittlung der Kosten für die Bestandteile der technischen Vorrichtung und/oder Energiekosten.

Bei dem ökonomischen Bewertungsfaktor werden beispielsweise die Kosten für eine Lampentype errechnet, die dem Anwender entstehen, wenn er einen vorgegebenen Raum für eine vorgegebene Zeit mit einem vorgegebenen Lichtstrom beleuchtet.

Außerdem ist es vorteilhaft, wenn die Prognosephase einen oder mehrere der folgenden zusätzlichen Verfahrensschritte umfasst:
o Berechnung des Ersatzbedarfs für jeden Bestandteil der technischen Vorrichtung innerhalb eines vorwählbaren Zeithorizonts,
o Berechnung der zeitlichen Reichweite für jeden Bestandteil gemessen am aktuellen Lagerbestand,
o Berechnung der, Energie-, Beschaffungs- und Wartungskosten,
o Erstellung einer Bestellliste für den Ersatzbedarf.

In einer vorteilhaften Weiterbildung des erfindungsgemäßen Verfahrens ist eine zusätzliche Optimierungsphase vorgesehen, die einen oder mehrere der folgenden Verfahrensschritte umfasst:
o Reduzierung der Typenvielfalt gleichwertiger Bestandteile der technischen Vorrichtung,
o Substituierung bisheriger Bestandteile durch technologisch verbesserte Bestandteile, die aus einer Datenbank aktualisiert werden, wobei die Datenbank online mit den Daten des Herstellers abgeglichen und aktualisiert werden, nach vom Nutzer wählbaren Kriterien,
o Optimierung des Ersatzteilelagers.

Optional ist eine "Was-wäre-wenn-Betrachtung" vorgesehen, bei der der Vorschlag des Expertensystems in der Optimierungsphase mit dem gegenwärtigen Stand verglichen wird. In einer Gegenüberstellung wird der Investitionsbedarf und die Wirtschaftlichkeit für beide Varianten errechnet, sowie die Einsparung und die Amortisationszeit für den Optimierungsvorschlag.

Für den Fall, dass die Bestandteile Lampen und/oder zugehörige Betriebsgeräte sind, kann zur Verbesserung des Komforts zusätzlich eine Lichtsteuerung und/oder eine Konstantlichtregelung in der Beleuchtungsanlage vorgesehen sein. Auch in diesem Zusammenhang eignet sich das bereits erwähnte DALI-Bussystem besonders gut.

Schließlich sieht eine Weiterbildung der Erfindung vor, die wirtschaftlichen Kenndaten, insbesondere Energie- und Wartungskosten der Vorrichtung als Absolutbetrag pro Zeitraum, z.B. Jahr, und spezifisch pro Fläche, z.B. in Quadratmetern, durch rekursive Aufsummierung über einen ausgewählten Gebäudebereich und alle darin befindlichen Raumbereiche, in denen die Vorrichtung installiert ist, zu berechnen und einen Bericht darüber zu erstellen, z.B. die Kosten pro Raum, Stockwerk, Gebäude, Liegenschaft etc.. Die Auswahl des von der Rekursion betroffenen Bereichs, erfolgt z.B. durch Auswahl in einem Hierarchiebaum.

Außerdem wird ein Computerprogramm beansprucht, das beim Betrieb die erfindungsgemäßen Verfahrensschritte ausführt sowie ein Datenträger, auf dem das Computerprogramm gespeichert ist.

### Kurze Beschreibung der Zeichnungen

Im Folgenden soll die Erfindung anhand eines Ausführungsbeispiels näher erläutert werden. Die Figuren zeigen:
- Fig. 1: eine hierarchische Gliederung der hinsichtlich der Beleuchtungsanlage relevanten Gebäudeteile,
- Fig. 2: eine tabellarische Übersicht einiger Daten der in einem Raum installierten Lampen,
- Fig. 3: den Bildschirmaufbau der Eingangsseite einer Software, in der das erfindungsgemäße Verfahren implementiert ist, und weitere Seiten aufrufbar sind,
- Fig. 4: den Bildschirmaufbau der Seite "Raum",
- Fig. 5: den Bildschirmaufbau der Seite "Übersicht",
- Fig. 6: den Bildschirmaufbau der Seite "Leuchte",
- Fig. 7: den Bildschirmaufbau der Seite "Kosten",
- Fig. 8: den Bildschirmaufbau der Seite "Wartung + Prognose",
- Fig. 9: den Bildschirmaufbau der Seite "LampAnalyzer",
- Fig. 10: den Bildschirmaufbau der Seite "Individualleuchte",
- Fig. 11: den Bildschirmaufbau des Moduls "Lampensuchmaschine".

### Bevorzugte Ausführung der Erfindung

Das Ausführungsbeispiel betrifft eine Software für die Instandhaltung von Beleuchtungsanlagen. Sie ist in der Sprache "Java" programmiert und deshalb unabhängig vom Betriebssystem des verwendeten Rechners. Außerdem zeichnet sie sich unter anderem durch einen modularen Aufbau aus, wobei die einzelne Module auch alleine funktionsfähig sind (Baukastenprinzip).

In einem ersten Schritt (Initialisierungsphase) wird der Bestand an Lampen und Lampenvorschaltgeräten, optional auch an Leuchten, der Beleuchtungsanlage ermittelt und dokumentiert. Dies kann entweder manuell durch Eingabe in das Rechnersystem erfolgen oder idealerweise automatisiert über die DALI-Schnittstelle, über die sich die elektronischen Vorschaltgeräte beim zentralen Server anmelden.

Es sind zur Charakterisierung der Komponenten der Beleuchtungsanlage lediglich 5 Kennwerte notwendig:
1) Anzahl Leuchten,
2) Anzahl Lampen je Leuchte,
3) Lampenbezeichnung,
4) Vorschaltgerätetyp,
   a) kein Vorschaltgerät (VG),
   b) konventionelles VG,
   c) elektronisches VG,
   d) verlustarmes VG
5) Betriebszeit pro Jahr.

Andere lampenspezifische Größen, wie z.B.:
o Bestellbezeichnung,
o EAN-Code,
o Lebensdauer,
o Anschlussleistung,
o Sockel,
o Lichtstrom,
o Abmessungen,
o Versandeinheit,
o Bezugspreis,
o Bild,
werden durch Zugriff auf eine Datenbank ermittelt, in der die Lampendaten gespeichert sind. Eine Aktualisierung der Daten kann über einen Online-Datenabgleich mit dem Lampenhersteller erfolgen.

Im nächsten Schritt erfolgt eine Analyse (Modul "LampAnalyzer") und eventuell Bewertung ("Ranking") hinsichtlich Energieverbrauch der Lampen, z.B. gemäß Richtlinie 98/11/EG und Energieverbrauchskennzeichungsverordnung. Darüber hinaus wird ein spezieller Bewertungsfaktor berechnet aus verschiedenen technischen und wirtschaftlichen Kriterien, wie Produktinnovation, Unterhaltskosten, Dimmbarkeit, Lichtausbeute und Farbwiedergabe der Lampe. Außerdem wird die Typendiversifikation der Beleuchtungsanlage erfasst, d.h. die Häufigkeit gleicher bzw. ähnlicher Lampentypen.

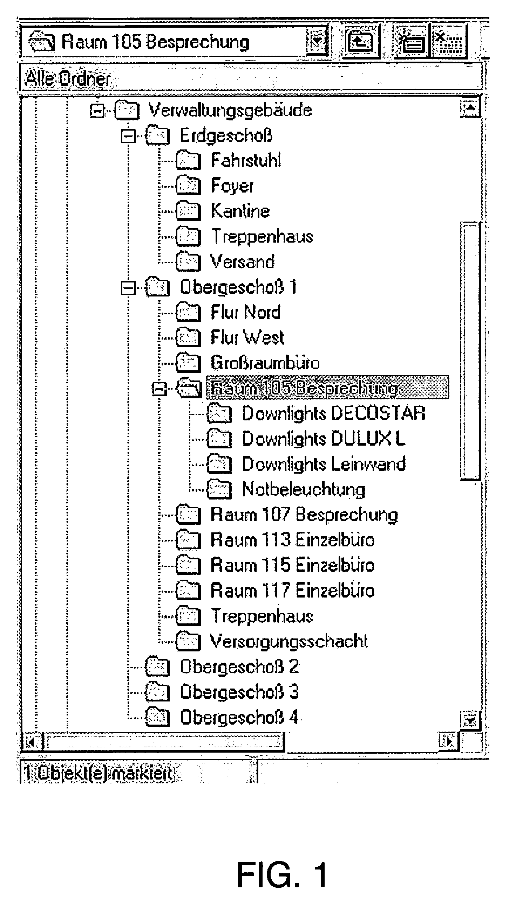

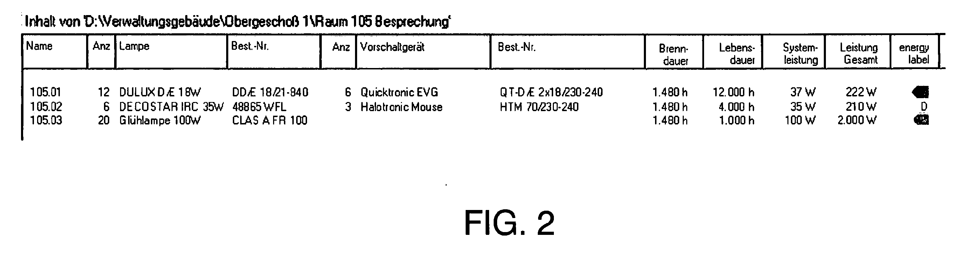

In den Figuren 1 und 2 ist exemplarisch für ein Verwaltungsgebäude der Bildschirmaufbau der Software in einem Art "Expertenmodus" gezeigt, wie er sich typischerweise nach Abschluss der Initialisierungs- und Analysephase darstellt.

Figur 1 zeigt die hierarchische Gliederung der hinsichtlich der Beleuchtungsanlage relevanten Bestandteile dieses Gebäudes, z.B. die verschiedenen Geschosse mit den dort jeweils befindlichen Räumen, dem Fahrstuhl, dem Treppenhaus, der Notbeleuchtungsanlage usw.. Markiert ist hier beispielhaft der Besprechungsraum 105. Dazu korrespondiert die in Figur 2 gezeigte ausschnittweise Ansicht, in der tabellarisch die in diesem Raum installierten Lampen einschließlich wichtiger Daten wie z.B. Anzahl, Brenndauer, Lebensdauer, Energy Label etc. aufgeführt sind.

In der folgenden Prognosephase werden Wartungstermine ermittelt, ab denen mit Ausfällen der Lampen zu rechnen ist. Als Grundlage hierzu dienen Nutzungsprofile, basierend auf der Zeitdauer der täglichen, wöchentlichen, monatlichen oder jährlichen Betriebsstunden jeder Lampe sowie die Produktdatenbank, aus der z.B. die mittlere Lebensdauer oder andere Lebensdauermodelle (Anlagenlebensdauer, Nutzlebensdauer) entnommen werden. Optional ist eine Frühwarnzeit frei wählbar, um rechtzeitig vor dem prognostizierten Ausfall der jeweiligen Lampe vom Rechner informiert zu werden.

In diesem Zusammenhang ist auch das zusätzliche Modul "Lagerhaltung" (StockOptimizer) vorteilhaft, welches den benötigten Ersatzbedarf für alle Lampentypen optimiert, d.h. nicht zu viel aber auch nicht zu wenig, und zwar je nach betrachtetem Zeithorizont, d.h. für eine frei wählbare Zeitspanne, z.B. 6 Monate, 1 Jahr usw.. Dabei kann zum einen die Reichweite für den aktuellen Lagerbestand abgerufen werden, zum andern die zu erwartenden Beschaffungs- und Wartungskosten. Außerdem werden Einkaufslisten für verschiedene Bestellkanäle, z.B. per E-mail, Fax oder Online-Bestellung (E-Business) erstellt und auf Wunsch dem Lampenhersteller ein Bestellformular übermittelt.

Im Optimierungsmodul ("LampOptimizer") schlägt ein Expertensystem zu jedem Lampentyp mehrere Substitute vor und bewertet diese nach verschiedenen Kriterien, z.B. nach Qualität, Komfort, Wirtschaftlichkeit, wobei der Nutzer eine Priorisierung dieser Kriterien vornehmen kann. Auf Wunsch können Optimierungsvorschläge zur bisherigen Ausstattung angezeigt werden, wobei Einsparungen und Amortisation als Entscheidungsgrundlage für einen Umstieg auf höherwertige Lampentypen herangezogen werden. Ein weiteres Optimierungskriterium ist eine Reduzierung der Typenvielfalt, verbunden mit den Vorteilen einer erleichterten Lagerhaltung, verbessertem Servicegrad sowie vereinfachtem Warenbezug, aufgrund der größeren Stückzahlen pro Lampentyp zu eventuell besseren Konditionen.

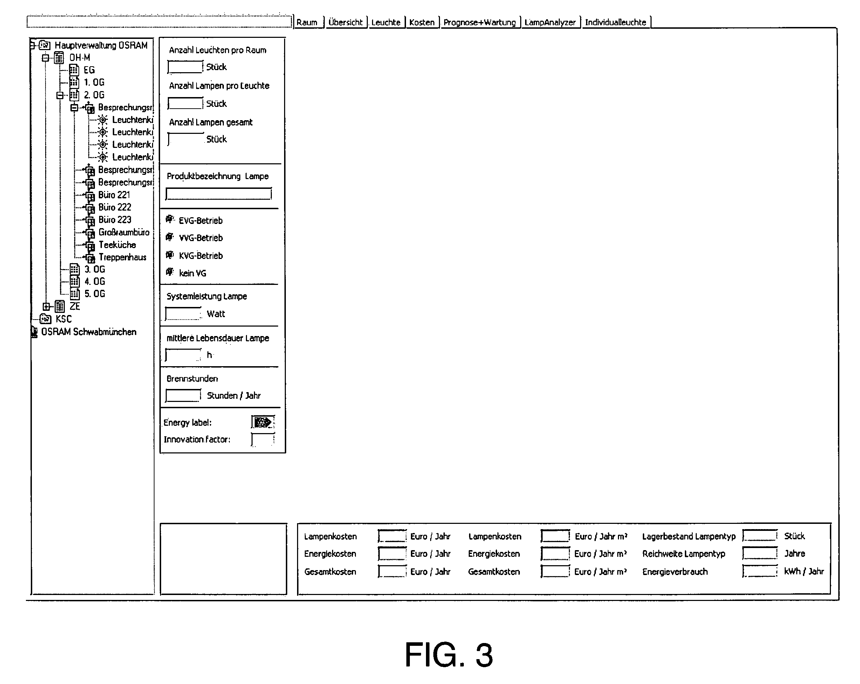

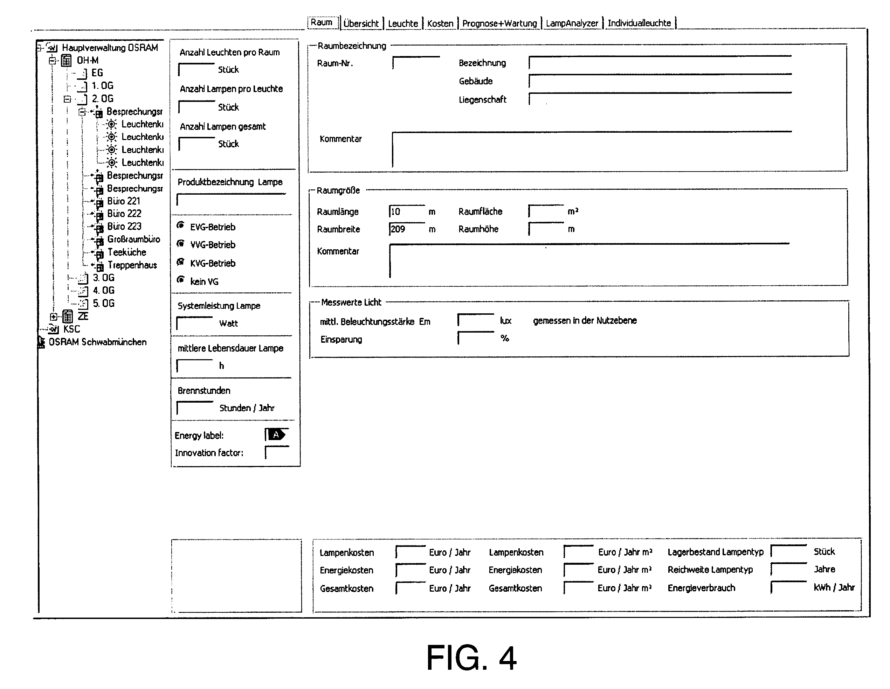

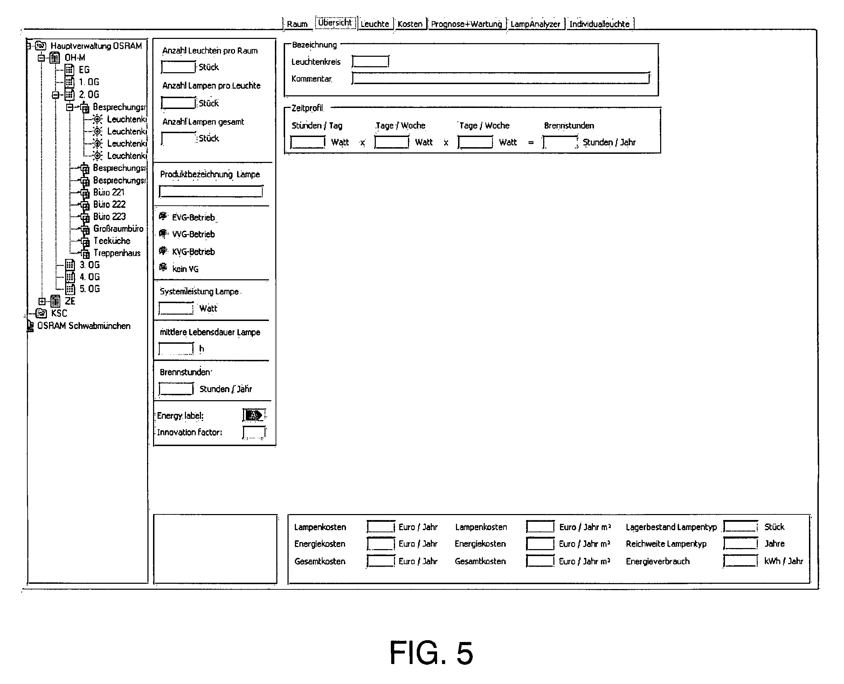

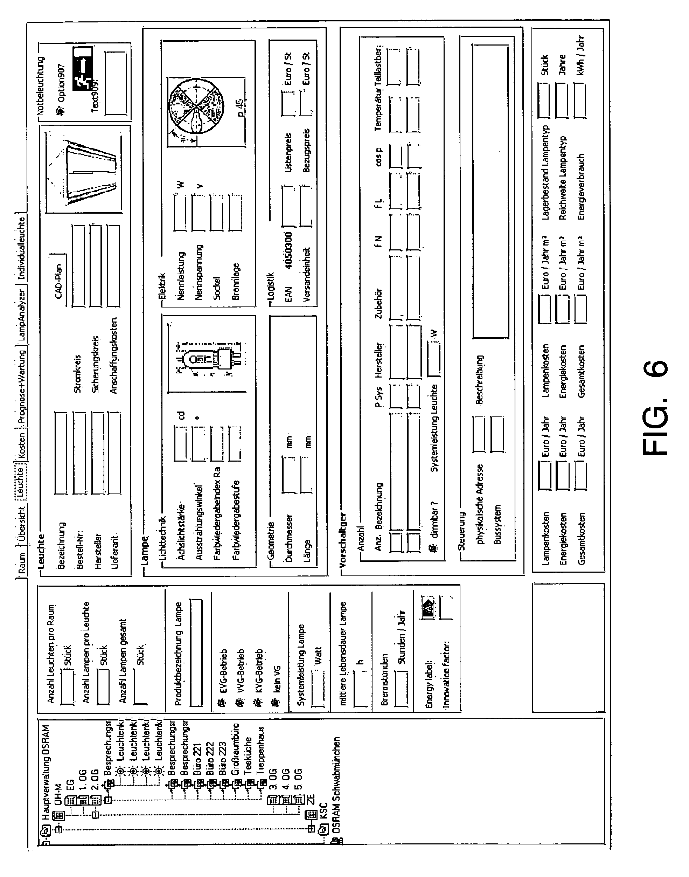

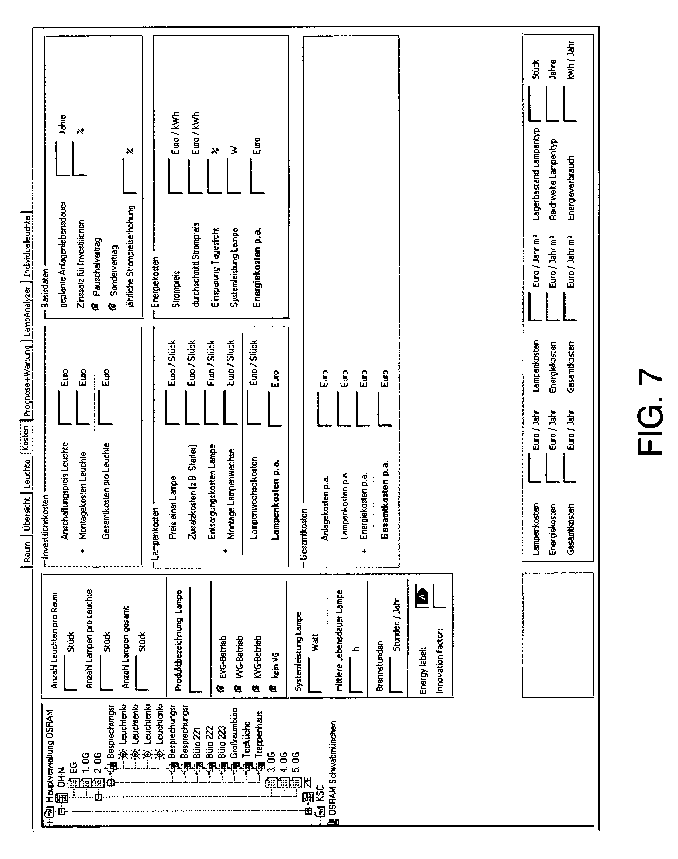

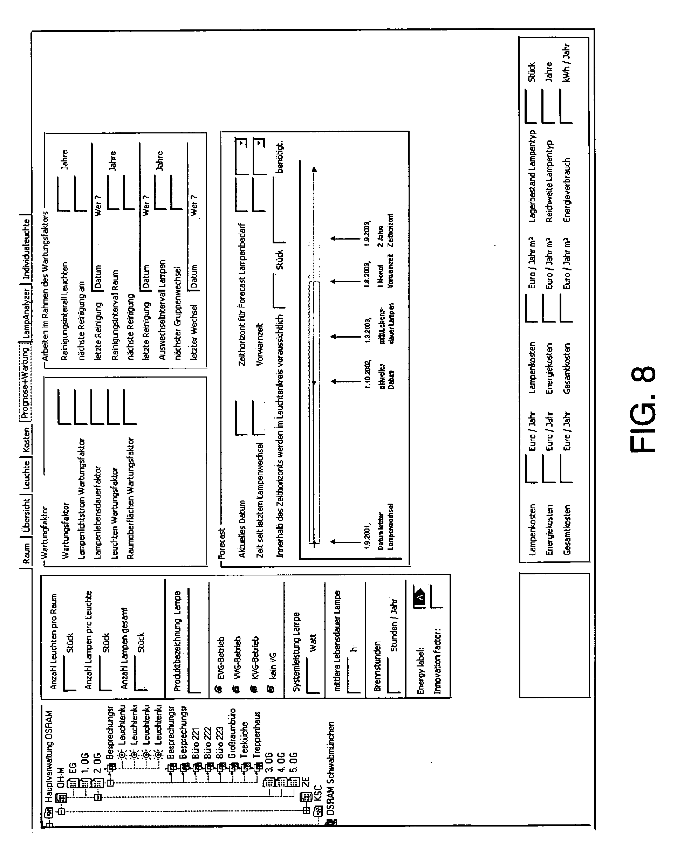

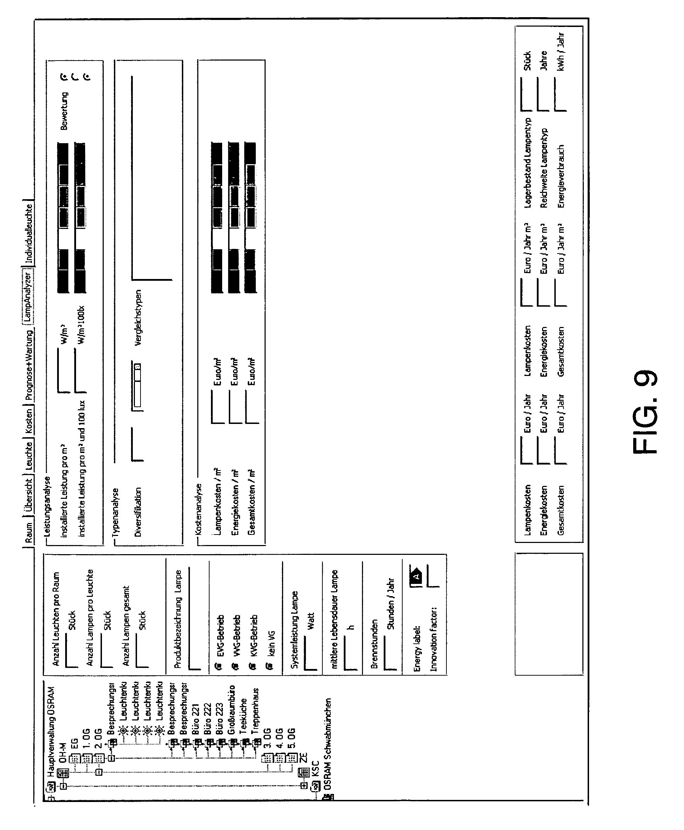

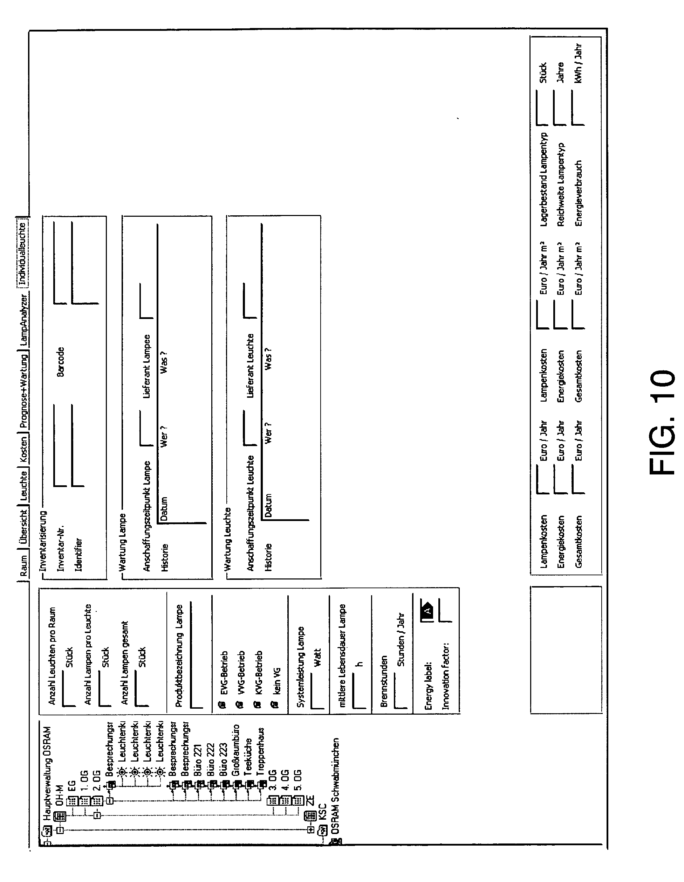

In den Figuren 3 bis 10 ist eine im Vergleich zu dem "Expertenmodus" der Fig. 1 und 2 grafisch aufwändigere Umsetzung der Software dargestellt. Die Fig. 3 zeigt den Bildschirmaufbau der Eingangsseite, von der aus weitere Seiten, bezeichnet mit "Übersicht", "Raum", "Leuchte", "Kosten" usw. aufrufbar sind. Diese weiteren Seiten sind in den Fig. 4 bis 10 dargestellt. Der Aufbau der einzelnen Seiten ist dabei so konzipiert, dass auch ein technisch weniger geschulter Nutzer diese Software bedienen kann.

Damit die Auswahl der Lampen auch für einen Laien einfach durchführbar ist, ist in einer Weiterbildung ein zusätzliches Modul "Lampensuchmaschine" vorgesehen, die die Auswahl der richtigen Lampentype wie folgt ermöglicht:
1) Auswahl der Produktsparte Allgebrauchs-, Halogen-, Leuchtstoff-, Kompaktleuchtstoff-, Hochdruckentladungs-, Fotooptik-, Automotive- oder Flachstrahlerlampe sowie Leuchtdioden (LED) über grafische Symbole und beschreibenden Text,
2) weitere Auswahlkriterien wie z.B. Kolbenform, Bauform, Sockel, Leistung, Lichtfarbe, Länge und weitere Ausprägungen der Lampe werden durch Grafik- und Textfilter solange eingeschränkt, bis der Anwender eine so weit reduzierte Auswahl von Typen angegeben wird, dass eine einfache Auswahl möglich ist. Die Auswahl wird durch Bilder bzw. Skizzen angezeigt.

Aus der unübersichtlichen Liste der Gesamtauswahl aller verfügbaren Lampentypen wird so eine übersichtliche Liste nur weniger Lampentypen mit durch Filter vorgegebenen gemeinsamen Merkmalen angeboten.

Eine Klartexteingabe der Bestellbezeichnung ist ebenfalls möglich. Werden dabei Teile der Bestellbezeichnung eingegeben, so zeigt die Suchmaschine die Liste der in Frage kommenden Typen an.

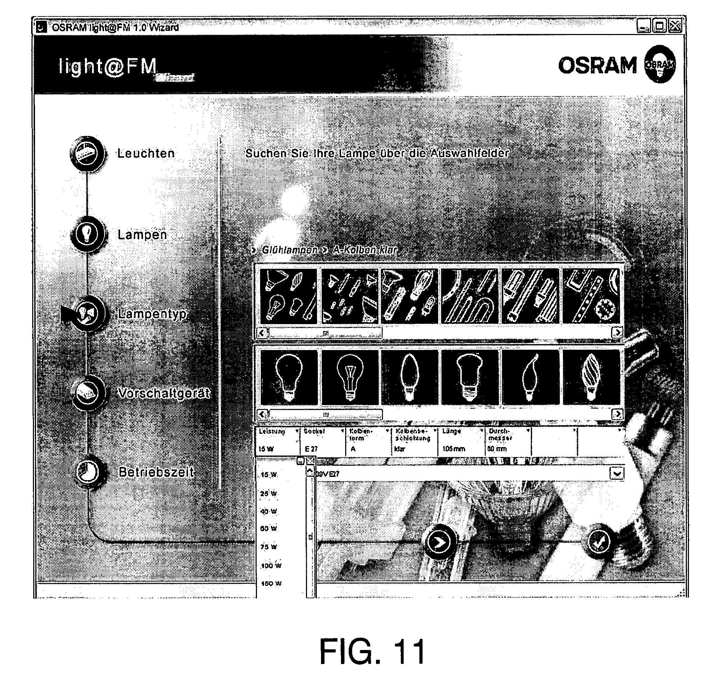

In Fig. 11 ist beispielhaft der Bildschirmaufbau des Moduls Lampensuchmaschine dargestellt.

Die einzelnen Module der Software, wie LampAnalyzer, LampOptimizer bzw. StockOptimizer und andere, sind durch autarke Programme (Java Applets) repräsentiert. Die Daten, die über mehrere Eingangskanäle (z.B. Excel, ASCII oder XML) in das System eingespeist werden können, werden von diesen Modulen bearbeitet. Die Ergebnisse werden an ein anderes Modul weitergegeben oder es wird ein Report erzeugt, der z.B. über eine XML, Excel, ASCII Schnittstelle einem beim Nutzer bereits vorhandenen CAFM-Programm bzw. dem Rechnersystem des Lampenherstellers zur Verfügung steht.

Außerdem ist prinzipiell auch eine Fernwartung der Anlage über das Internet möglich.

## Patentansprüche

1. Verfahren zur Instandhaltung einer technischen Vorrichtung, insbesondere einer Beleuchtungsanlage, mit Hilfe eines Rechnersystems und folgenden Verfahrensschritten,
• in einer Initialisierungsphase:
o Identifizierung der Bestandteile der technischen Vorrichtung,
o Erfassung spezifischer Daten der Bestandteile mit Hilfe eines mit dem Rechnersystem zumindest zeitweise verbundenen Datenbanksystems,
o Speicherung der den Bestandteilen zugeordneten spezifischen Daten in dem Rechnersystem,
• in einer Prognosephase:
o Berechnung von Wartungsterminen und Erstellung von Wartungsplänen für die Bestandteile der technischen Vorrichtung auf der Basis der spezifischen Daten dieser Bestandteile.

2. Verfahren nach Anspruch 1, wobei die Bestandteile der technischen Vorrichtung über ein Bussystem mit dem Rechnersystem verbunden sind und wobei die Identifizierung der Bestandteile durch das Bussystem erfolgt.

3. Verfahren nach einem der vorstehenden Ansprüche, wobei die Berechnung der Wartungstermine auf geschätzten Betriebsdauern der Bestandteile der technischen Vorrichtung beruht.

4. Verfahren nach einem der Ansprüche 1 oder 2, wobei die Berechnung der Wartungstermine auf über das Bussystem von dem Rechnersystem ermittelten tatsächlichen Betriebsdauern der Bestandteile beruht.

5. Verfahren nach einem der Ansprüche 3 oder 4, wobei sich die Berechnung der Wartungstermine an den für jedes Bestandteil auf dem Datenbanksystem gespeicherten mittleren Lebensdauern oder anderen Lebensdauermodellen orientiert.

6. Verfahren nach einem der vorstehenden Ansprüche, mit einer zusätzlichen
• Analysephase,
in der für die Bestandteile der technischen Vorrichtung zumindest einer der folgenden Verfahrensschritte ausgeführt wird:
o Erfassung des jeweiligen in dem Datenbanksystem gespeicherten Energieverbrauchswerts und Speicherung in dem Rechnersystem,
o Berechnung eines Bewertungsfaktors aus zumindest einem Teil der spezifischen Daten und Speicherung in dem Rechnersystem,
o Ermittlung der Häufigkeit gleicher bzw. ähnlicher Bestandteile und Speicherung in dem Rechnersystem,
o Ermittlung der Kosten für die Bestandteile der technischen Vorrichtung und/oder Energiekosten.

7. Verfahren nach einem der vorstehenden Ansprüche, wobei die Prognosephase einen oder mehrere der folgenden zusätzlichen Verfahrensschritte umfasst:
o Berechnung des Ersatzbedarfs für jeden Bestandteil der technischen Vorrichtung innerhalb eines vorwählbaren Zeithorizonts,
o Berechnung der zeitlichen Reichweite für jeden Bestandteil gemessen am aktuellen Lagerbestand,
o Berechnung der Beschaffungs- und Wartungskosten,
o Erstellung einer Bestellliste für den Ersatzbedarf.

8. Verfahren nach einem der vorstehenden Ansprüche, mit einer zusätzlichen
• Optimierungsphase,
die einen oder mehrere der folgenden Verfahrensschritte umfasst:
o Reduzierung der Typenvielfalt der Bestandteile der technischen Vorrichtung,
o Substituierung bisheriger Bestandteile durch technologisch verbesserte Bestandteile, die aus einer Datenbank aktualisiert werden, wobei die Datenbank online mit den Daten des Herstellers abgeglichen und aktualisiert werden, nach vom Nutzer wählbaren Kriterien,
o Optimierung des Ersatzteilelagers.

9. Verfahren nach Anspruch 8, mit einer zusätzlichen
• "Was-wäre-wenn-Betrachtung",
die folgende Verfahrensschritte umfasst:
o Berechnen für die bisherigen Bestandteile und für die optimierten Bestandteile:
o den Investitionsbedarf,
o die Wirtschaftlichkeit,
o Berechnen für die optimierten Bestandteile:
o die Einsparung,
o die Amortisationszeit.

10. Verfahren nach einem der vorstehenden Ansprüche, wobei die Bestandteile Lampen und/oder zugehörige Betriebsgeräte sind.

11. Verfahren nach Anspruch 10, wobei zusätzlich eine Lichtsteuerung und/oder eine Konstantlichtregelung vorgesehen ist.

12. Verfahren nach einem der Ansprüche 10 oder 11, insbesondere in Verbindung mit Anspruch 2, wobei als Bussystem das DALI-Bussystem verwendet wird.

13. Verfahren nach einem der vorstehenden Ansprüche, bei dem die wirtschaftlichen Kenndaten, insbesondere Energie- und Wartungskosten der Vorrichtung als Absolutbetrag pro Zeitraum und pro Fläche rekursiv über alle Gebäudebereiche, in denen die Vorrichtung installiert ist, und alle darin befindlichen Raumbereiche berechnet und berichtet werde.

14. Computerprogramm, das beim Betrieb die Verfahrensschritte gemäß den Ansprüchen 1 bis 13 ausführt.

15. Datenträger, auf dem das Computerprogramm gemäß Anspruch 14 gespeichert ist.
